# EUROPEAN PATENT APPLICATION

(11) **EP 4 693 950 A1**
(43) Date of publication of application: **11.02.2026**
(21) Application number: 24791935.0
(22) Date of filing: 12.04.2024
(51) Int. Cl.: H04B 10/11

(54) **COMMUNICATION DEVICE AND METHOD FOR WIRELESS OPTICAL COMMUNICATION**

(30) Priority: 20.04.2023 CN 202310463475
(71) Applicant: Huawei Technologies Co., Ltd., Shenzhen, Guangdong 518129 (CN)
(72) Inventor: SHEN, Mengkui, Shenzhen, Guangdong 518129 (CN); CAI, Meng, Shenzhen, Guangdong 518129 (CN); MA, Chuanhui, Shenzhen, Guangdong 518129 (CN)
(74) Representative: Maiwald GmbH
(86) International application number: PCT/CN2024/087504
(87) International publication number: WO 2024/217350

(57) **Abstract**

Embodiments of this application relate to a first communication device and a method for wireless optical communication. The first communication device includes: a control circuit, configured to determine turbulence intensity of an atmospheric channel between the first communication device and a second communication device; a spatial light modulation module, configured to adjust, based on the turbulence intensity, a phase of an optical signal to be sent to the second communication device; and a sending module, configured to send the optical signal with the phase to the second communication device. In this manner, the first communication device can adapt to turbulent environments of different intensity, ensuring stability and reliability of optical communication.

## Description

This application claims priority to Chinese Patent Application No. 202310463475.3, filed with the China National Intellectual Property Administration on April 20, 2023 and entitled "COMMUNICATION DEVICE AND METHOD FOR WIRELESS OPTICAL COMMUNICATION", which is incorporated herein by reference in its entirety.

### TECHNICAL FIELD

This disclosure relates to the field of communication technologies, and more specifically, to a communication device and a method for wireless optical communication.

### BACKGROUND

Compared with microwaves, light waves exhibit characteristics of narrow divergence angles, strong resistance to electromagnetic interference, short wavelengths, high frequencies, and significant bandwidth advantages. Optical networks utilize optical fibers to deliver high-speed content to customer premises. Typically, the optical fiber can provide gigabit data transmission rates for upstream and downstream connections between a content source and the customer premises. However, construction costs associated with the deployment of optical fiber paths from an access point or a node of an optical network to each customer premise are high, and there may be an unforeseen delay caused due to zoning regulations.

As the free space optical communication (free space optical communication, FSO) technology features small sizes, large capacities, high confidentiality, high transmission rates, license-free frequency, elimination of layout of optical fiber links, and easy installation, FSO can be used to resolve the foregoing challenges associated with deployment of common optical fibers. FSO is widely used in deep space exploration, navigation, aerospace, and urban local area networks. However, due to particularity (for example, atmospheric turbulence and atmospheric attenuation) of a transmission medium in the FSO technology, it becomes particularly challenging to ensure communication performance in various actual situations.

### SUMMARY

To ensure communication performance of an FSO system in a turbulent environment, embodiments of this disclosure provide a communication device and a method for wireless optical communication.

According to a first aspect, a first communication device is provided. The first communication device includes: a control circuit, configured to determine turbulence intensity of an atmospheric channel between the first communication device and a second communication device; a spatial light modulation module, configured to adjust, based on the turbulence intensity, a phase of an optical signal to be sent to the second communication device; and a sending module, configured to send the optical signal with the phase to the second communication device. In this manner, the first communication device can adapt to turbulent environments of different intensity. This ensures stability and reliability of optical communication.

In some embodiments of the first aspect, the optical signal may be a first optical signal, and the control circuit may be configured to determine the turbulence intensity based on at least one of the following: a meteorological parameter related to the atmospheric channel; or received power of a second optical signal received from a second communication device. In this manner, the turbulence intensity of the atmospheric channel can be determined, so that the first communication device adaptively adjusts the phase of the optical signal, to adapt to turbulent environments of different intensity.

In some embodiments of the first aspect, a light pattern of the optical signal may include one of the following: Gaussian light, needle light, Bessel light, or bottle light. In this manner, a light source characteristic can be changed. This implements a better environment adaptability.

In some embodiments of the first aspect, when the turbulence intensity is lower than a first threshold, the light pattern of the optical signal may be the Gaussian light. In this manner, low output power can be used to adapt to a non-turbulent environment or a weak turbulent environment.

In some embodiments of the first aspect, when the turbulence intensity is higher than the first threshold, the light pattern of the optical signal may be the needle light. In this manner, low output power can be used to adapt to a strong turbulent environment, and communication stability in a harsh environment is improved.

In some embodiments of the first aspect, the needle light may include one of the following: sidelobe-free needle light, single-sidelobe needle light, double-sidelobe needle light, or triple-sidelobe needle light. In this manner, a light field distribution can be adaptively adjusted to meet communication requirements in different environments.

In some embodiments of the first aspect, the spatial light modulation module may be specifically configured to: adjust the light pattern of the optical signal to the sidelobe-free needle light based on determining that the turbulence intensity is higher than the first threshold and lower than a second threshold; and adjust the light pattern of the optical signal to the single-sidelobe needle light based on determining that the turbulence intensity is higher than the second threshold. In this manner, the light source characteristic can be adaptively adjusted based on the turbulence intensity of the atmospheric channel, to adapt to different turbulent environments.

In some embodiments of the first aspect, the spatial light modulation module may be specifically configured to: adjust the light pattern of the optical signal to the double-sidelobe needle light based on determining that the turbulence intensity is higher than the first threshold and lower than a second threshold; and adjust the light pattern of the optical signal to the triple-sidelobe needle light based on determining that the turbulence intensity is higher than the second threshold. In this manner, the light source characteristic can be adaptively adjusted based on the turbulence intensity of the atmospheric channel, to adapt to different turbulent environments.

In some embodiments of the first aspect, the first communication device may further be configured to adjust an amplitude of the optical signal based on the turbulence intensity. In this manner, a propagation capability of the optical signal can be adjusted based on the turbulence intensity of the atmospheric channel, to adapt to different turbulent environments.

According to a second aspect, a method for wireless optical communication is provided. For beneficial effect, refer to descriptions of the first aspect. Details are not described herein again. The method includes: A first communication device determines turbulence intensity of an atmospheric channel between the first communication device and a second communication device; the first communication device adjusts, based on the turbulence intensity, a phase of an optical signal to be sent to the second communication device; and the first communication device sends the optical signal with the phase to the second communication device.

In some embodiments of the second aspect, the optical signal may be a first optical signal, and the turbulence intensity may be determined based on at least one of the following: a meteorological parameter related to the atmospheric channel; or received power of a second optical signal received from the second communication device.

In some embodiments of the second aspect, a light pattern of the optical signal may include one of the following: Gaussian light, needle light, Bessel light, or bottle light.

In some embodiments of the second aspect, when the turbulence intensity is lower than a first threshold, the light pattern of the optical signal may be the Gaussian light.

In some embodiments of the second aspect, when the turbulence intensity is higher than the first threshold, the light pattern of the optical signal may be the needle light.

In some embodiments of the second aspect, the needle light may include one of the following: sidelobe-free needle light, single-sidelobe needle light, double-sidelobe needle light, or triple-sidelobe needle light.

In some embodiments of the second aspect, when the turbulence intensity is higher than the first threshold and lower than a second threshold, the light pattern of the optical signal may be the sidelobe-free needle light. When the turbulence intensity is higher than the second threshold, the light pattern of the optical signal may be the single-sidelobe needle light.

In some embodiments of the second aspect, when the turbulence intensity is higher than the first threshold and lower than a second threshold, the light pattern of the optical signal may be the double-sidelobe needle light. When the turbulence intensity is higher than the second threshold, the light pattern of the optical signal may be the triple-sidelobe needle light.

In some embodiments of the second aspect, the method may further include: The first communication device adjusts an amplitude of the optical signal based on the turbulence intensity.

This application provides a computer-readable storage medium. The computer-readable storage medium stores a computer program, and the computer program includes program instructions. When the program instructions are executed, a computer is enabled to perform the method according to the second aspect.

This application provides a computer program product. The computer program product includes a computer program, and the computer program includes program instructions. When the program instructions are executed, a computer is enabled to perform the method according to the second aspect.

This application further provides a communication system, including the first communication apparatus and the second communication apparatus in the foregoing embodiments.

This application further provides a chip, including a processor and a communication interface. The processor reads, through the communication interface, instructions stored in a memory, to perform the method according to the second aspect.

### BRIEF DESCRIPTION OF DRAWINGS

Features, advantages, and other aspects of implementations of this specification become more apparent with reference to the accompanying drawings and the following detailed descriptions. Several implementations of this specification are shown herein by way of example but not limitation. In the accompanying drawings:
FIG. 1A is a block diagram of a communication system applicable to some embodiments of this specification;
FIG. 1B is a diagram of performance curves of an FSO system under different turbulence intensity;
FIG. 2 is a block diagram of a first communication device according to some embodiments of this specification;
FIG. 3A is a diagram of a turbulence intensity prediction procedure according to some embodiments of this specification;
FIG. 3B is a diagram of an optical signal phase adjustment procedure according to some embodiments of this specification;
FIG. 4 is a block diagram of an example of a first communication device according to some embodiments of this specification;
FIG. 5 is a flowchart of a communication method according to some embodiments of this specification; and
FIG. 6 is a simplified block diagram of an example of a device suitable for implementing an embodiment of this application.

In the accompanying drawings, the same or similar reference numerals indicate the same or similar elements.

### DESCRIPTION OF EMBODIMENTS

Embodiments of this specification are described in more detail in the following with reference to the accompanying drawings. Although some embodiments of this specification are shown in the accompanying drawings, it should be understood that this specification can be implemented in various forms, and should not be construed as being limited to embodiments described herein. On the contrary, these embodiments are provided for a more thorough and complete understanding of this specification. It should be understood that the accompanying drawings and embodiments of this specification are merely used as examples and are not intended to limit the protection scope of this specification.

In descriptions of embodiments of this specification, the term "including" and similar terms thereof should be understood as non-exclusive inclusions, that is, "including but not limited to". The term "based on" should be understood as "at least partially based on". The term "one embodiment" or "this embodiment" should be understood as "at least one embodiment". In embodiments of this application, for a type of technical feature, "first", "second", "third", and the like are used to distinguish between technical features in the type of technical feature, and there is no time or magnitude order between the technical features described by "first", "second", and "third". The following may further include other explicit and implied definitions. The term "basically similar" and similar terms should be understood as that an error between the two is within a predetermined range, and the predetermined range may be specifically determined by a person skilled in the art based on a specific technical scenario in which embodiments of this specification are applied.

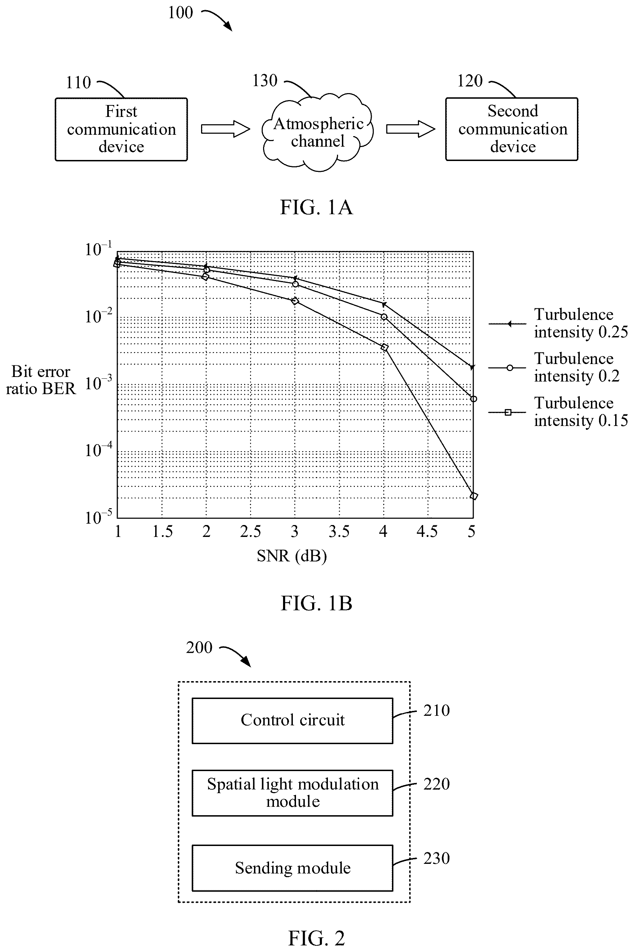

FIG. 1A is a block diagram of a communication system 100 applicable to some embodiments of this specification. As shown in FIG. 1, the FSO system 100 may include a first communication device 110, a second communication device 120, and an atmospheric channel 130. The first communication device 110 may be used as a transmitter, and the second communication device 120 may be used as a receiver. An optical signal sent by the first communication device 110 may be transmitted to the second communication device 120 through the atmospheric channel 130. In some embodiments, the first communication device 110 may be alternatively used as a receiver, the second communication device 120 may be alternatively used as a transmitter, and an optical signal sent by the second communication device 120 may be transmitted to the first communication device 110 through the atmospheric channel 130.

Due to various particles (for example, dust and water droplets) in the atmospheric environment and complex and changeable weather conditions (for example, wind, cloud, and snow), the atmospheric channel 130, as a random channel, has great impact on propagation of a wireless optical signal, including an atmospheric turbulence effect and an atmospheric attenuation effect. The atmospheric turbulence effect is mainly that an optical beam deviates from a propagation direction, and phenomena such as light intensity flicking, light beam drifting, and image point jitter are caused due to disturbance of the optical signal caused by atmospheric movement. The atmospheric attenuation is that optical signal attenuation is caused by absorption and scattering of the optical signal by suspended particles such as various gas molecules.

The turbulence effect is one of main factors that hinder development of an FSO technology. In the FSO system, the turbulence effect causes fluctuation of an atmospheric refractive index, damages laser coherence and weakens light beam directivity, and causes negative impact such as light intensity fluctuation and light beam drifting. This causes difficulty in signal receiving of the FSO system, and even causes communication interruption and reduces communication stability.

Different turbulence intensity has different impact on a laser signal. Phase fluctuation caused by turbulence increases with enhancement of turbulence intensity. After a light beam is transmitted to a far field through a turbulent random phase screen, a light spot becomes more fragmented, and light energy in an effective detection area decreases. In addition, a communication bit error ratio (bit error ratio, BER) is related to the turbulence intensity. FIG. 1B is a diagram of performance curves of an FSO system under different turbulence intensity. As shown in FIG. 1B, under a same signal to noise ratio (signal to noise ratio, SNR), smaller intensity of atmospheric turbulence indicates a lower bit error ratio of the system. This is because smaller turbulence intensity indicates smaller fluctuation of light intensity and smaller intensity of interference affecting an optical signal. However, there is no effective solution to ensure stability of optical communication in turbulent environments of different intensity.

In view of this, an embodiment disclosed in this application provides a first communication device. In the first communication device, a phase of a to-be-sent optical signal is adjusted based on turbulence intensity of an atmospheric channel, so that the first communication device can adapt to turbulent environments of different intensity, and ensure stability and reliability of optical communication by using a low output power, without increasing link complexity and costs.

FIG. 2 is a block diagram of a first communication device 200 according to some embodiments of this specification. The first communication device 200 may be implemented as the first communication device 110 in the communication system 100 shown in FIG. 1A. As shown in FIG. 2, the first communication device 200 includes a control circuit 210, a spatial light modulation module 220, and a sending module 230. The control circuit 210 may be configured to determine turbulence intensity of an atmospheric channel between the first communication device 200 and a second communication device. The spatial light modulation module 220 is configured to perform phase modulation. For example, the spatial light modulation module 220 may be configured to adjust, based on the determined turbulence intensity, a phase of an optical signal to be sent to the second communication device. The sending module 230 may be configured to send the optical signal with the phase to the second communication device. In this manner, a turbulence adaptation function may be added to the first communication device, to improve a turbulence resistance capability of an FSO system under different turbulence intensity, and enhance stability of optical communication.

In some embodiments, the control circuit 210 may determine the turbulence intensity of the atmospheric channel based on a meteorological parameter related to the atmospheric channel. In other words, the control circuit 210 may predict the turbulence intensity of the atmospheric channel based on the meteorological parameter. For example, the control circuit 210 may predict an atmospheric turbulence intensity characteristic parameter based on the meteorological parameter.

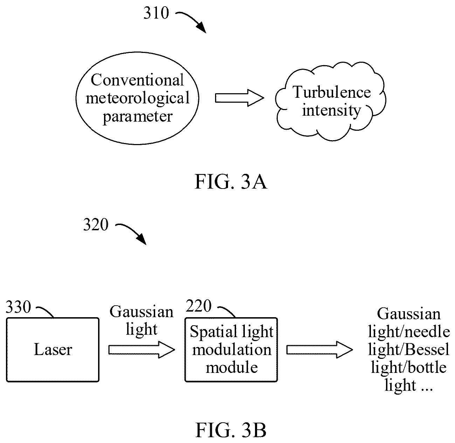

FIG. 3A is a diagram of a turbulence intensity prediction procedure 310 according to some embodiments of this specification. The control circuit 210 may determine turbulence intensity based on a conventional meteorological parameter. The conventional meteorological parameter may include one or more of parameters such as an atmospheric temperature, atmospheric pressure, humidity, and a wind speed. In some embodiments, the meteorological parameter may be obtained by adding a related sensor device to the first communication device 200. In some embodiments, the meteorological parameter may alternatively be obtained by sharing meteorological satellite data. Based on the meteorological parameter, the control circuit 210 may predict the atmospheric turbulence intensity characteristic parameter according to a preset turbulence parameterization scheme. The turbulence parameterization scheme may be one of the following prediction schemes: a Tatarski method, a Thorpe scale method, a hybrid neural network scheme, a machine learning-based parameterization scheme, or the like. It may be understood that these turbulence parameterization schemes are merely examples and are not intended to impose limitations. The control circuit 210 may determine the atmospheric turbulence intensity characteristic parameter according to another turbulence parameterization scheme. The turbulence intensity prediction process 310 is merely an example. The control circuit 210 may alternatively determine the turbulence intensity of the atmospheric channel by using another method.

In some embodiments, the optical signal to be sent by the first communication device 200 to the second communication device may be a first optical signal, and the control circuit 210 may determine the turbulence intensity of the atmospheric channel based on received power of a second optical signal received from the second communication device. In other words, based on reciprocity of a transmit channel and a receive channel, the first communication device 200 may estimate the turbulence intensity of the atmospheric channel based on power of an optical signal received on a receive link.

In some embodiments, the control circuit 210 may determine the turbulence intensity of the atmospheric channel based on the meteorological parameter related to the atmospheric channel and the received power of the second optical signal received from the second communication device. In other words, the control circuit 210 may establish a turbulence intensity prediction model by using a turbulence prediction algorithm, and perform forward predetermining on turbulence intensity of a current atmospheric environment based on a meteorological parameter like an atmospheric temperature, humidity, and a wind speed. Further, based on the reciprocity of the transmit channel and the receive channel, the control circuit 210 may verify the turbulence intensity of the current atmospheric environment based on backward feedback received power. With reference to forward predetermining and backward feedback, the control circuit 210 may determine the turbulence intensity of the current atmospheric environment with high accuracy.

In some embodiments, a light pattern of the optical signal may include one of the following: Gaussian light, needle light, Bessel light, bottle light, or the like. In some embodiments, the needle light may include one of the following: sidelobe-free needle light, single-sidelobe needle light, double-sidelobe needle light, triple-sidelobe needle light, or the like. It may be understood that these light patterns are merely examples and are not intended to impose limitations. The optical signal may alternatively have another light pattern. In some embodiments, the spatial light modulation module 220 may output optical signals with different light patterns by adjusting phases of the optical signals.

The spatial light modulation module 220 is configured to perform phase modulation. FIG. 3B is a diagram of an optical signal phase adjustment procedure 320 performed by the spatial light modulation module 220 according to some embodiments of this specification. The first communication device 200 may further include a laser 330. In the optical signal phase adjustment procedure 320, the spatial light modulation module 220 may adjust a phase of Gaussian light generated by the laser 330, to change a light source characteristic. For example, based on determined turbulence intensity of an atmospheric channel, the spatial light modulation module 220 may implement needle light (including sidelobe-free needle light, single-sidelobe needle light, double-sidelobe needle light, triple-sidelobe needle light, and the like), Bessel light, bottle light, or another light source by adjusting a phase of an optical signal. In some embodiments, based on the determined turbulence intensity of the atmospheric channel, the spatial light modulation module 220 may further directly output the Gaussian light generated by the laser 330, without performing phase modulation on the Gaussian light. In some embodiments, based on the determined turbulence intensity of the atmospheric channel, the spatial light modulation module 220 may further perform phase adjustment on the Gaussian light generated by the laser 330, and output Gaussian light with an increased transmission distance. In some embodiments, the spatial light modulation module 220 may be a liquid crystal spatial light modulator (liquid crystal spatial light modulator, LC-SLM). It may be understood that the spatial light modulation module 220 may alternatively have another type, but is not limited to the LC-SLM.

In some embodiments, when the turbulence intensity is lower than a first threshold, a light pattern of an optical signal obtained through phase modulation may be Gaussian light. In other words, the first communication device 200 may use the Gaussian light to adapt to a non-turbulent environment or a weak turbulent environment. In some embodiments, the spatial light modulation module 220 may not perform phase adjustment on the optical signal. In some embodiments, the spatial light modulation module 220 may adjust a phase of the Gaussian light, to increase a transmission distance of the Gaussian light.

In some embodiments, when the turbulence intensity is higher than the first threshold, the light pattern of the optical signal may be needle light. In other words, the first communication device 200 may use the needle light to adapt to a strong turbulent environment. In some embodiments, when the turbulence intensity is greater than the first threshold and less than a second threshold, the spatial light modulation module 220 may adjust the light pattern of the optical signal to sidelobe-free needle light. When the turbulence intensity is greater than the second threshold, the spatial light modulation module 220 may adjust the light pattern of the optical signal to single-sidelobe needle light. In some embodiments, when the turbulence intensity is greater than the first threshold and less than a second threshold, the spatial light modulation module 220 may adjust the light pattern of the optical signal to double-sidelobe needle light. When the turbulence intensity is greater than the second threshold, the spatial light modulation module 220 may adjust the light pattern of the optical signal to triple-sidelobe needle light. It may be understood that these embodiments are merely examples and are not intended to impose limitations. The spatial light modulation module 220 may alternatively adjust the light pattern of the optical signal to another light pattern.

In some embodiments, the first communication device 200 may further be configured to adjust an amplitude of the optical signal based on the turbulence intensity. In this manner, the first communication device 200 may adjust the phase and the amplitude of the optical signal based on the turbulence intensity, to adapt to different turbulent environments, so as to improve communication stability in a harsh atmospheric environment by using low laser output power.

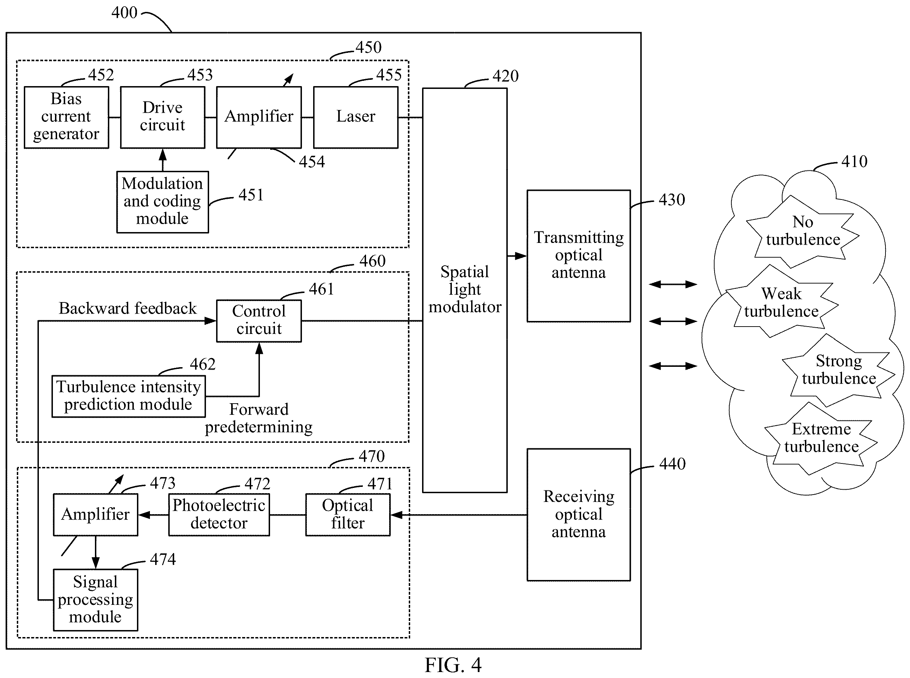

FIG. 4 is a block diagram of an example of a first communication device 400 according to some embodiments of this specification. The first communication device 400 may be considered as a specific implementation of the first communication device 200 shown in FIG. 2. The communication device 400 may include an optical signal generation module 450, a control module 460, a spatial light modulator 420, and a transmit optical antenna 430.

In some embodiments, the first communication device 400 may further include a receive optical antenna 440 and a receive processing module 470. For example, the receive processing module 470 may include a photoelectric filter 471, an photoelectric detector 472, an amplifier 473, and a signal processing module 474. The receive optical antenna 440 may receive an optical signal, with useful information, transmitted through an atmospheric channel. The signal processing module 474 may convert the optical signal into an electrical signal through filtering, detection, and the like, and recover the useful information from the received optical signal.

The optical signal generation module 450 may modulate information to a wireless optical signal. The optical signal generation module 450 may include a modulation and coding module 451, a bias current generator 452, a drive circuit 453, an amplifier 454, and a laser 455.

The control module 460 may determine a phase of a to-be-sent optical signal based on predicted or estimated turbulence intensity of the atmospheric channel 410. In some embodiments, the control module 460 may include a turbulence intensity prediction module 462. The turbulence intensity prediction module 462 may predetermine turbulence intensity in an atmospheric environment. A control circuit 461 in the control module 460 may determine the phase of the optical signal based on forward predetermining from the turbulence intensity prediction module 462. Alternatively or in addition, another optical signal transmitted through the atmospheric channel 410 may be received at the receive optical antenna 440, and the optical signal may be processed by the receive processing module 470. The control circuit 461 may determine the turbulence intensity of the atmospheric channel 410 based on power of the received optical signal. In other words, the control circuit 461 may determine the turbulence intensity of the atmospheric channel 410 based on forward predetermining or backward feedback, or a combination thereof. Through forward predetermining and backward feedback, turbulence intensity in an environment can be accurately determined, and a reliable information input is provided for transmitting of the optical signal. This improves reliability of FSO communication. It may be understood that the control circuit 461 may alternatively determine the turbulence intensity of the atmospheric channel 410 in another manner.

The spatial light modulator 420 may adjust, based on the phase determined by the control module 460, a phase of an optical signal generated by the optical signal generation module 450. An optical signal obtained through phase modulation may be transmitted to free space through the transmit optical antenna 430. For example, the optical signal may be transmitted to a second communication device through the atmospheric channel 410. By adding a spatial light modulator, a phase control circuit, and a turbulence prediction module to an FSO system, the turbulence intensity in the atmosphere can be detected in real time, and the phase of the optical signal can be adaptively adjusted, so that an anti-turbulence capability of the optical signal can be enhanced with low costs and power consumption of a communication system. By embedding a turbulence sensing function and an adaptive anti-turbulence light source into the FSO system, a limitation of an atmospheric turbulence effect on FSO communication can be removed. This opens a way for wireless optical communication in the 5.5G/6G era.

In some embodiments, Gaussian light may be used to adapt to a non-turbulent environment or a weak turbulent environment. For example, the turbulence intensity of the atmospheric channel may be represented by an atmospheric coherence length R0. A larger atmospheric coherence length R0 indicates weaker turbulence intensity. For example, when the atmospheric coherence length R0 meets R0>B0 (B0 is a first threshold), the Gaussian light may be used. In an example, when R0>1, it may be considered that there is very weak turbulence in a current atmospheric environment. When 0.1<R0<1, it may be considered that there is weak turbulence in the current atmospheric environment. In both the two scenarios, an optical signal may be transmitted in a form of Gaussian light. For example, the turbulence intensity prediction module 462 may predict that there is weak turbulence, very weak turbulence, or no turbulence in the atmosphere. In addition, power of the optical signal received by the receive optical antenna 440 is high, so that it can be backward verified that turbulence in the atmospheric environment is weak or very weak. Therefore, a phase of the Gaussian light emitted by the laser 455 does not need to change, and the Gaussian light is still output after passing through the spatial light modulator 420. In this manner, a light source characteristic is adaptively adjusted based on the turbulence intensity, to adapt to different turbulent environments. This effectively reduces output power of the laser, and improves communication stability in a harsh environment. When there is no turbulence or weak turbulence, transmission of the optical signal may not be affected, and the first communication device does not need to use a high-power laser.

In some embodiments, needle light may be used to adapt to a strong turbulent environment or an extreme turbulent environment. For example, when the atmospheric coherence length R0 meets A0>R0>A1, sidelobe-free needle light may be used. When the atmospheric coherence length R0 meets R0<A2, single-sidelobe needle light may be used. For example, when 0.01<R0<0.1, it may be considered that there is strong turbulence in the current atmospheric environment, and the optical signal is transmitted in a form of sidelobe-free needle light. When R0<0.01, it may be considered that there is extreme turbulence in the current atmospheric environment, and the optical signal is transmitted in a form of single-sidelobe needle light. For example, the turbulence intensity prediction module 462 may predict that there is strong turbulence or extreme turbulence in the atmosphere. In addition, the power of the optical signal received by the receive optical antenna 440 is low, so that it can be backward verified that turbulence in the atmospheric environment is strong or extreme. Therefore, when the Gaussian light emitted by the laser 455 passes through the spatial phase modulator 420, a phase of the Gaussian light is changed, and finally needle light is output. In this manner, the light source characteristic is adaptively adjusted based on the turbulence intensity, to adapt to different turbulent environments. This effectively reduces output power of the laser, and improves communication stability in the harsh environment. When there is strong turbulence or extreme turbulence, the first communication device does not need to use a high-power laser. Impact of turbulence on a bit error ratio of a system can be reduced by dynamically changing the phase of the optical signal. Therefore, costs and power consumption of the first communication device can be reduced, and communication stability and reliability can be improved.

In some embodiments, in a non-turbulent environment, the Gaussian light has a good transmission characteristic. The spatial phase modulator 420 may adjust the phase of the optical signal (for example, change only a focal length and a Rayleigh distance) without changing a light pattern, to increase a transmission distance of the optical signal by using low output power.

In one embodiment, in a weak turbulent environment (for example, R0>0.08), needle light with two sidelobes has a good turbulence resistance. Therefore, the spatial phase modulator 420 may adjust the phase of the optical signal, to adjust light output by the laser 455 to double-sidelobe needle light. In one embodiment, in a medium turbulent environment (for example, 0.02<R0<0.08), needle light with two sidelobes has a good turbulence resistance. Therefore, the spatial phase modulator 420 may adjust the phase of the optical signal, to adjust light output by the laser 455 to double-sidelobe needle light. In one embodiment, in a strong turbulent environment (for example, R0<0.02), needle light with three sidelobes has a good turbulence resistance. Therefore, the spatial phase modulator 420 may adjust the phase of the optical signal, to adjust light output by the laser 455 to triple-sidelobe needle light. It may be understood that these examples are not intended to impose limitations, and another light pattern or phase adjustment manner may be used.

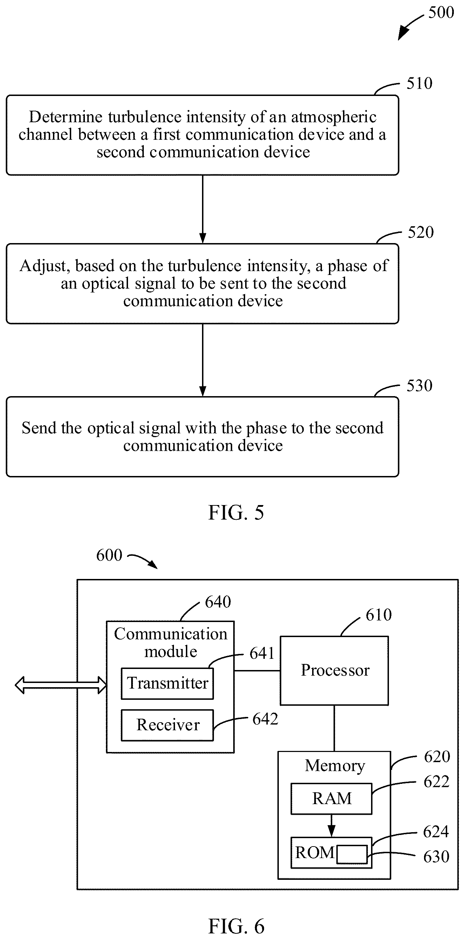

FIG. 5 is a flowchart of a communication method 500 according to some embodiments of this specification. In a possible implementation, the method 500 may be implemented by the first communication device 200 shown in FIG. 2. In another possible implementation, the method 500 may alternatively be implemented by another electronic apparatus different from the first communication device 200. As an example, the following describes the method 500 by using an example in which the method 500 is implemented by the first communication device 200.

In step 510, the first communication device 200 determines turbulence intensity of an atmospheric channel between the first communication device 200 and a second communication device. In step 520, the first communication device 200 adjusts a phase of an optical signal to be sent to the second communication device based on the turbulence intensity. In step 530, the first communication device 200 sends an optical signal with the phase to the second communication device. In this manner, the first communication device can adapt to turbulent environments of different intensity. This ensures stability and reliability of optical communication.

In some embodiments, the optical signal may be a first optical signal, and the turbulence intensity may be determined based on at least one of the following: a meteorological parameter related to the atmospheric channel; or received power of a second optical signal received from the second communication device. In some embodiments, the first communication device 200 may further adjust an amplitude of the optical signal based on the turbulence intensity.

In some embodiments, a light pattern of the optical signal may include one of the following: Gaussian light, needle light, Bessel light, or bottle light. The first communication device 200 may change the light pattern of the optical signal by adjusting a phase of the optical signal. In some embodiments, when the turbulence intensity is lower than a first threshold, the light pattern of the optical signal may be the Gaussian light. In some embodiments, when the turbulence intensity is higher than the first threshold, the light pattern of the optical signal may be the needle light.

In some embodiments, the needle light may include one of the following: sidelobe-free needle light, single-sidelobe needle light, double-sidelobe needle light, or triple-sidelobe needle light. In some embodiments, when the turbulence intensity is higher than the first threshold and lower than a second threshold, the light pattern of the optical signal may be the sidelobe-free needle light. When the turbulence intensity is higher than the second threshold, the light pattern of the optical signal may be the single-sidelobe needle light. In some embodiments, when the turbulence intensity is higher than the first threshold and lower than a second threshold, the light pattern of the optical signal may be the double-sidelobe needle light. When the turbulence intensity is higher than the second threshold, the light pattern of the optical signal may be the triple-sidelobe needle light.

FIG. 6 is a simplified block diagram of an example device 600 suitable for implementing an embodiment of this specification. The device 600 may be configured to implement the first communication device 200 shown in FIG. 2. As shown in the figure, the device 600 includes one or more processors 610, one or more memories 620 coupled to the processor 610, and a communication module 640 coupled to the processor 610. In some embodiments, the memory 620 and the processor 610 may be integrated together.

The communication module 640 may be configured for bidirectional communication. The communication module 640 may include a transmitter 641 configured to send data and a receiver 642 configured to receive data.

The processor 610 may be of any type suitable for a local technology network, and may include but is not limited to at least one of the following: a general-purpose computer, a dedicated computer, a microcontroller, a digital signal processor (Digital Signal Processor, DSP), or one or more of controller-based multi-core controller architectures. The device 600 may have a plurality of processors such as an application-specific integrated circuit chip, which belongs to a clock synchronized with a main processor in terms of time.

The memory 620 may include one or more non-volatile memories and one or more volatile memories. Examples of the non-volatile memory include but are not limited to at least one of the following: a read-only memory (Read-Only Memory, ROM) 624, an erasable programmable read-only memory (Erasable Programmable Read-Only Memory, EPROM), a flash memory, a hard disk, a compact disc (Compact Disc, CD), a digital versatile disc (Digital Versatile Disc, DVD), or another magnetic storage and/or optical storage. Examples of the volatile memory include but are not limited to at least one of the following: a random access memory (Random Access Memory, RAM) 622, or another volatile memory that does not persist for duration of a power failure.

A computer program 630 includes computer-executable instructions executed by the associated processor 610. The program 630 may be stored in the ROM 620. The processor 610 may perform any suitable action and processing by loading the program 630 into the RAM 620.

Embodiments of this specification may be implemented by using the program 630, so that the device 600 can perform any process discussed with reference to FIG. 5. Embodiments of this application may alternatively be implemented by hardware or a combination of software and hardware.

In some embodiments, the program 630 may be tangibly included in a computer-readable medium, and the computer-readable medium may be included in the device 600 (for example, in the memory 620) or another storage device that may be accessed by the device 600. The program 630 may be loaded from the computer-readable medium to the RAM 622 for execution. The computer-readable medium may include any type of tangible non-volatile memory, for example, a ROM, an EPROM, a flash memory, a hard disk, a CD, or a DVD.

Usually, various embodiments of this specification may be implemented by hardware or a dedicated circuit, software, logic, or any combination thereof. Some aspects may be implemented by hardware, and other aspects may be implemented by firmware or software, and may be executed by a controller, a microprocessor, or another computing device. Although aspects of embodiments of this specification are shown and described as block diagrams or flowcharts, or represented by some other illustrations, it should be understood that the blocks, apparatuses, systems, technologies, or methods described in this specification may be implemented as, for example, non-limiting examples, hardware, software, firmware, dedicated circuits or logic, general-purpose hardware, controllers, other computing devices, or a combination thereof.

This specification further provides at least one computer program product tangibly stored in a non-transitory computer-readable storage medium. The computer program product includes computer-executable instructions, for example, instructions included in the program module, which are performed in a device on a real or virtual processor of the target to perform the process/method as described above with reference to FIG. 5. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

Computer program code used for implementing the method in this specification may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of this specification, the computer program code or related data may be carried in any suitable carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this specification are described in a particular order in the accompanying drawings, this does not require or imply that these operations need to be performed in the particular order or that all of the shown operations need to be performed to achieve a desired result. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to this specification may be specific in one apparatus. Instead, features and functions of one apparatus described above may be further specific in a plurality of apparatuses.

The foregoing has described various implementations of this specification. The foregoing descriptions are examples, are not exhaustive, and are not limited to the disclosed implementations. Without departing from the scope of the described implementations, many modifications and variations are apparent to a person of ordinary skill in the art. Selection of the terms used in this specification is intended to well explain principles of the implementations, actual applications, or improvements to technologies in the market, or to enable another person of ordinary skill in the art to understand the implementations disclosed in this specification.

## Claims

1. A first communication device, comprising:
a control circuit, configured to determine turbulence intensity of an atmospheric channel between the first communication device and a second communication device;
a spatial light modulation module, configured to adjust, based on the turbulence intensity, a phase of an optical signal to be sent to the second communication device; and
a sending module, configured to send the optical signal with the phase to the second communication device.

2. The first communication device according to claim 1, wherein the optical signal is a first optical signal, and the control circuit is configured to determine the turbulence intensity based on at least one of the following:
a meteorological parameter related to the atmospheric channel; or
received power of a second optical signal received from the second communication device.

3. The first communication device according to claim 1, wherein a light pattern of the optical signal comprises one of the following:
Gaussian light;
needle light;
Bessel light; or
bottle light.

4. The first communication device according to any one of claims 1 to 3, wherein
when the turbulence intensity is lower than a first threshold, the light pattern of the optical signal is the Gaussian light.

5. The first communication device according to any one of claims 1 to 3, wherein
when the turbulence intensity is higher than a first threshold, the light pattern of the optical signal is the needle light.

6. The first communication device according to claim 5, wherein the needle light comprises one of the following:
sidelobe-free needle light;
single-sidelobe needle light;
double-sidelobe needle light; or
triple-sidelobe needle light.

7. The first communication device according to claim 5, wherein the spatial light modulation module is specifically configured to:
adjust the light pattern of the optical signal to the sidelobe-free needle light based on determining that the turbulence intensity is higher than the first threshold and lower than a second threshold; and
adjust the light pattern of the optical signal to the single-sidelobe needle light based on determining that the turbulence intensity is higher than the second threshold.

8. The first communication device according to claim 5, wherein the spatial light modulation module is specifically configured to:
adjust the light pattern of the optical signal to the double-sidelobe needle light based on determining that the turbulence intensity is higher than the first threshold and lower than a second threshold; and
adjust the light pattern of the optical signal to the triple-sidelobe needle light based on determining that the turbulence intensity is higher than the second threshold.

9. The first communication device according to claim 1, wherein the first communication device is further configured to adjust an amplitude of the optical signal based on the turbulence intensity.

10. A method for wireless optical communication, comprising:
determining, by a first communication device, turbulence intensity of an atmospheric channel between the first communication device and a second communication device;
adjusting, by the first communication device based on the turbulence intensity, a phase of an optical signal to be sent to the second communication device; and
sending, by the first communication device, the optical signal with the phase to the second communication device.

11. The method according to claim 10, wherein the optical signal is a first optical signal, and the turbulence intensity is determined based on at least one of the following:
a meteorological parameter related to the atmospheric channel; or
received power of a second optical signal received from the second communication device.

12. The method according to claim 10, wherein a light pattern of the optical signal comprises one of the following:
Gaussian light;
needle light;
Bessel light; or
bottle light.

13. The method according to any one of claims 10 to 12, wherein when the turbulence intensity is lower than a first threshold, the light pattern of the optical signal is the Gaussian light.

14. The method according to any one of claims 10 to 12, wherein when the turbulence intensity is higher than a first threshold, the light pattern of the optical signal is the needle light.

15. The method according to claim 14, wherein the needle light comprises one of the following:
sidelobe-free needle light;
single-sidelobe needle light;
double-sidelobe needle light; or
triple-sidelobe needle light.

16. The method according to claim 14, wherein
when the turbulence intensity is higher than the first threshold and lower than a second threshold, the light pattern of the optical signal is the sidelobe-free needle light; and
when the turbulence intensity is higher than the second threshold, the light pattern of the optical signal is the single-sidelobe needle light.

17. The method according to claim 14, wherein
when the turbulence intensity is higher than the first threshold and lower than a second threshold, the light pattern of the optical signal is the double-sidelobe needle light; and
when the turbulence intensity is higher than the second threshold, the light pattern of the optical signal is the triple-sidelobe needle light.

18. The method according to claim 14, further comprising:
adjusting, by the first communication device, an amplitude of the optical signal based on the turbulence intensity.
